**Europäisches Patentamt**

**European Patent Office**

**Office européen des brevets**

(19)

(11) Veröffentlichungsnummer : **0 423 465 B1**

(12) **EUROPÄISCHE PATENTSCHRIFT**

(45) Veröffentlichungstag der Patentschrift :
11.11.92 Patentblatt 92/46

(51) Int. Cl.⁵ : **B60J 5/04**

(21) Anmeldenummer : 90116343.6

(22) Anmeldetag : 27.08.90

(54) **Türverkrallung an Kraftfahrzeugen.**

(30) Priorität : 17.10.89 DE 3934524

(43) Veröffentlichungstag der Anmeldung :
24.04.91 Patentblatt 91/17

(45) Bekanntmachung des Hinweises auf die
Patenterteilung :
11.11.92 Patentblatt 92/46

(84) Benannte Vertragsstaaten :
DE ES FR GB IT NL SE

(56) Entgegenhaltungen :
DE-B- 2 028 249
FR-A- 2 225 314
GB-A- 1 347 157

(73) Patentinhaber : **Dr.Ing.h.c. F. Porsche
Aktiengesellschaft
Porschestrasse 42
W-7000 Stuttgart 40 (DE)**

(72) Erfinder : **Schrader, Pieter-Jan, Dipl.-Ing.
Friolzheimer Strasse 76
W-7251 Flacht (DE)**
Erfinder : **Schumann, Georg
Schleirmacherstrasse 9/2
W-7250 Leonberg (DE)**

## Beschreibung

Die Erfindung bezieht sich auf eine Türverkrallung von Kraftfahrzeugen zum Schutz gegen seitliches Auftreffen bei Unfällen gemäß dem Oberbegriff des Anspruchs 1.

Aus der FR-A- 2 418 111 ist eine Türverkrallung der eingangs genannten Gattung genannt, wobei an der Tür ein Verstärkungsblech mit einem Haken und am Schweller eine korrespondierende Aufnahme angeordnet sind. Dieser Anordnung haftet der Nachteil an, daß bei geöffneter Tür sowohl das türseitige Verkrallungselement als auch schwellerseitige Verkrallungselement vorstehende Bauteile bilden, die beim Ein- und Aussteigen sowie beim Reinigen dieses Fahrzeugbereiches zu Verletzungen führen können. Ferner wird durch die abragenden freiliegenden Bauteile der Türverkrallung der stylistische Gesamteindruck des Fahrzeugs negativ beeinflußt.

Aufgabe der Erfindung ist es, an einer Türverkrallung solche Vorkehrungen zu treffen, daß bei guter Funktion keine Verletzungen des Fahrzeugbenutzers beim Ein- und Aussteigen bzw. beim Reinigen des Fahrzeuges auftreten können.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anordnung von mit Sollbruchstellen versehenen Verkleidungsteilen die Elemente der Türverkrallung bei geöffneter Tür abgedeckt sind und somit beim Ein- und Aussteigen bzw. beim Reinigen dieses Fahrzeugbereiches keine Verletzungen durch vorstehende Teile auftreten können. Bei einem seitlichen Aufprallstoß auf die Tür ist hingegen eine gute Funktion der Türverkrallung sichergestellt, da die Sollbruchstellen bei entsprechender Krafteinwirkung aufbrechen und somit ein wirkungsvolles Verhaken zwischen Tür und Schweller gewährleisten.

Ein Ausführungsbeispiel der Erfindung ist in der Zeichnung dargestellt und wird im folgenden näher erläutert.

Es zeigt:

Fig. 1 eine Seitenansicht auf eine Kraftfahrzeugtür und die umgebenden Teile der Karosserie,

Fig. 2 einen Schnitt nach der Linie II-II der Fig. 1 in größerem Maßstab und

Fig. 3 eine perspektivische Darstellung der Türverkrallung ohne die Verkleidungsteile.

Fig. 4 einen Schnitt ähnlich der Fig. 2 einer weiteren Ausführungsform der Türverkrallung

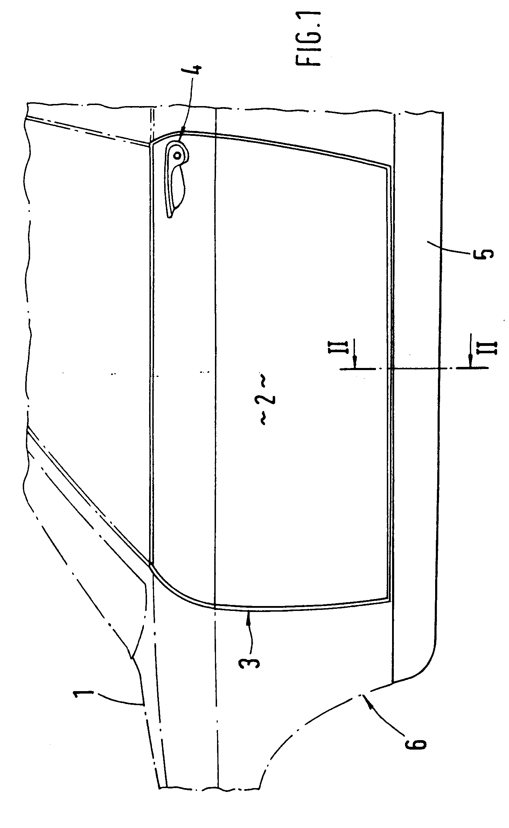

Von einem Kraftfahrzeug 1 ist eine Tür 2 dargestellt, die um eine vertikale Achse bei 3 schwenkbar und durch ein Schloß bei 4 verriegelbar ist. Unterhalb der Tür 2 erstreckt sich ein außenliegender Fahrzeuglängsträger 5 (Schweller), dessen vorderes Ende bis zu einem Radhaus 6 reicht (Fig. 1).

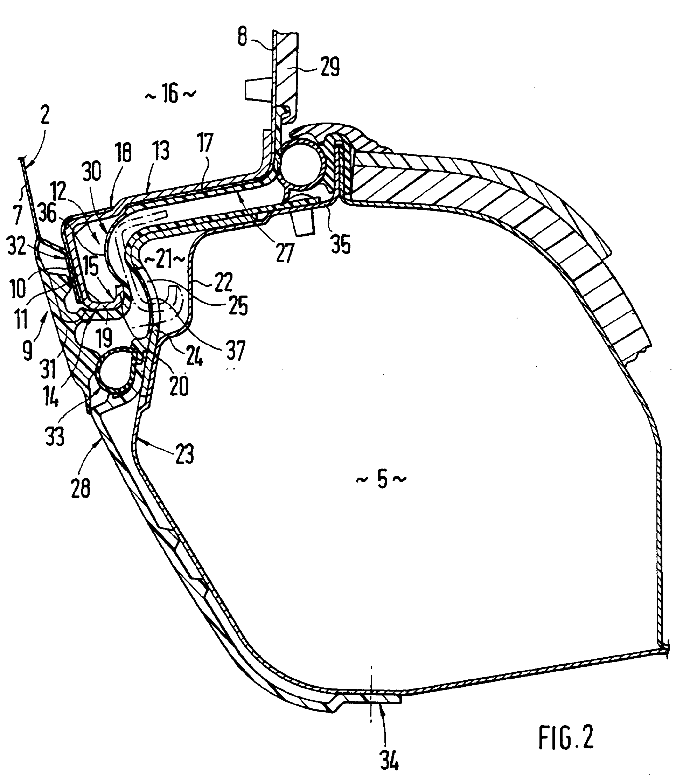

Die Tür 2 besteht gemäß Fig. 2 aus einem Außenblech 7 und einem Innenblech 8, die im unteren Bereich 9 an gleichgerichteten aufrechten Flanschen 10, 11 fest miteinander verbunden sind (z.B. durch Punktschweißen).

Zum Schutz gegen seitliches Auftreffen bei Unfällen ist zumindest im unteren Bereich 9 der Tür 2 eine Türverkrallung 12 vorgesehen, die türseitig ein Verstärkungsblech 13 umfaßt, dessen untenliegendes freies Ende 14 als Haken 15 ausgebildet ist. Das profilierte Verstärkungsblech 13 verläuft im Bereich des Hakens 15 außerhalb des Innenblechs 8, wogegen ein angrenzender Abschnitt innerhalb des Innenbleches 8 verdeckt im Türkörper 16 angeordnet ist. Benachbart einem aufrechten Flansch 11 weist das Innenblech 8 einen schrägen Wandabschnitt 17 auf, an dem eine Durchtrittsöffnung 18 für das Verstärkungsblech 13 vorgesehen ist.

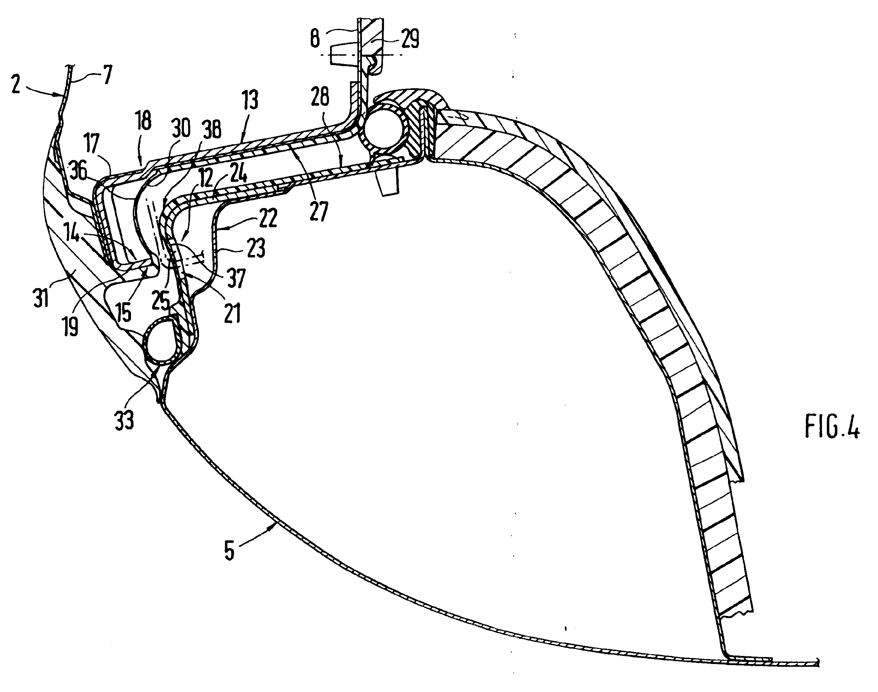

Das Verstärkungsblech 13 liegt bereichsweise an der Unterseite des Wandabschnitts 17 und an der dem Fahrzeuglängsträger 5 zugekehrten Seite des Flansches 11 an und ist dort mittels Schweißen in Lage gehalten. Das freie, benachbart den Flanschen 10, 11 angeordnete Ende 14 des Verstärkungsbleches 13 ist als Haken 15 ausgebildet, wobei sich der Haken 15 aus einem etwa horizontalen Wandabschnitt 19 und einem nach oben hin abgestellten Steg 20 zusammensetzt. Der Steg 20 verläuft benachbart einer schwellerseitigen Aufnahme 21 der Türverkrallung 12 (Fig. 2). Entsprechend Fig. 4 wird der Haken 15 lediglich durch den horizontalen Wandabschnitt 19 gebildet, dessen freies Ende der Aufnahme 21 zugekehrt ist.

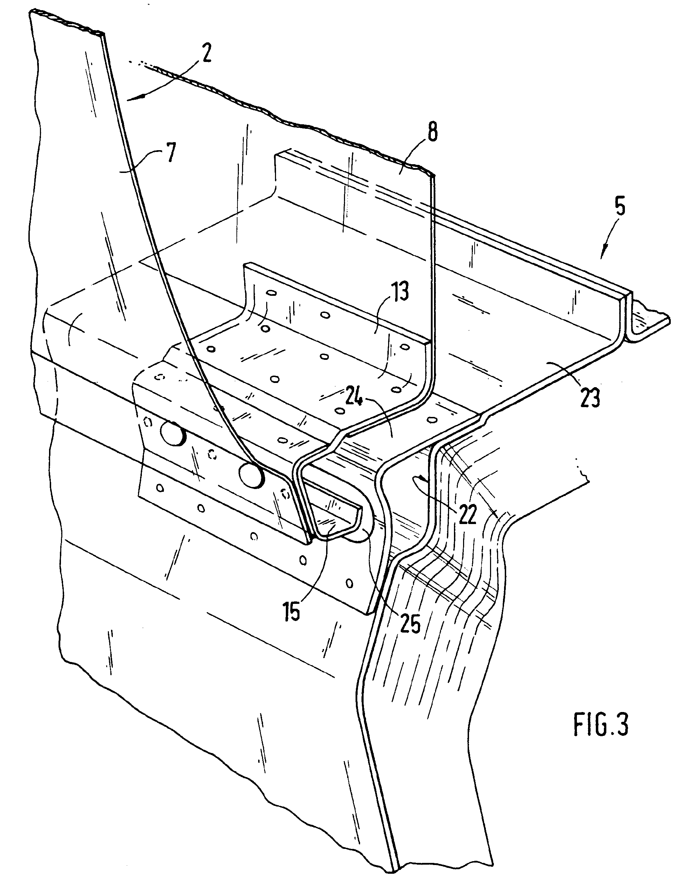

Die Aufnahme 21 wird durch eine nischenförmige Eindrückung 22 eines Schwelleraußenbleches 23 und durch ein winkelförmig profiliertes Schließteil 24 gebildet, wobei der Schließteil 24 von der Seite bzw. von oben auf die Eindrückung 22 aufgesetzt ist und diese verschließt. Das Schließteil 24 ist an der dem Haken 15 zugekehrten Seite mit einer länglichen horizontal ausgerichteten Schlitzöffnung 25 versehen. Diese überragt den Haken 15 nach oben und nach unten hin. Ferner weist die Schlitzöffnung 25 eine etwas größere Längserstreckung auf als der Haken 15 (Fig. 3).

Gemäß Fig. 2 ist sowohl der untere Bereich 9 der Tür 2 einschließlich des Verstärkungsbleches 13 und des Hakens 15 als auch ein außenliegender, die Aufnahme 21 enthaltender Bereich des Fahrzeuglängsträgers 5 mit einem Verkleidungsteil 27, 28 versehen. Beide Verkleidungsteile 27, 28 sind aus Kunststoff, Gummi oder dgl. gefertigt.

Das türseitige Verkleidungsteil 27 erstreckt sich von einer innenliegenden Seitenverkleidung 29 der Tür 2 vertikal nach unten und danach entlang des schrägen Wandabschnittes 17 nach außen. Anschließend verläuft ein kreisbogenförmiger Abschnitt 30 der Türverkleidung 27 nach unten hin und umgibt das freie Ende 14 des Verstärkungsbleches 13 mit dem Haken 15. Ein daran anschließender profilierter, aufrechter Endbereich 31 deckt eine Einprägung 32 des Außenbleches 7 ab und erstreckt sich nach unten hin bis zu einem Dichtkörper 33 des Fahrzeuglängsträgers 5.

Das schwellerseitige Verkleidungsteil 28 umgibt zumindest einen Teilbereich der Außenseite des Fahrzeuglängsträgers 5 und ist unten bei 34 und an der oberen Begrenzungsfläche 35 mit dem Fahrzeuglängsträger 5 verbunden (Fig. 2). Im oberen Bereich liegt das Verkleidungsteil 28 an der Außenseite des Schließteiles 24 bzw. des Schwereraußenblechs 23 an. Gemäß Fig. 4 deckt das Verkleidungsteil 28 lediglich einen oberen, die Aufnahme 21 enthaltenden Teilbereich des Fahrzeugslängsträgers 5 ab, wogegen der unterhalb des Dichtkörpers 33 liegende Bereich nicht verkleidet ist. Das türseitige Verkleidungsteil 27 und das schwellerseitige Verkleidungsteil 28 weisen benachbart der Verkrallungselemente (Haken 15, Aufnahme 21) angeordnete Wandabschnitte auf, die bei einem seitlichen Aufprallstoß auf die Tür 2 ab einer definierten Krafteinwirkung aufbrechen und die Verkrallungselemente 15, 21 freigeben. Die sich öffnenden Wandabschnitte sind als Sollbruchstellen 36, 37 ausgebildet. Diese Sollbruchstellen 36, 37 brechen ab einer definierten Krafteinwirkung durch das Zusammenwirken von Tür 2 und Fahrzeuglängsträger 5 auf, so daß ein wirkungsvolles Verhaken von Tür 2 und Fahrzeuglängsträger 5 gewährleistet ist. Die Verhakung ist in Fig. 2 strichpunktiert dargestellt. Eine besonders gute Funktion der Türverkrallung ist dann gegeben, wenn die Verkrallungselemente (Haken 15, Aufnahme 21) etwa S-förmig ausgebildet sind.

Im Normalzustand von Tür 2 und Fahrzeuglängsträger 5 sind die Elemente (15, 21) der Türverkrallung 12 durch die Verkleidungsteile 27, 28 nicht sichtbar.

Die türseitige Sollbruchstelle 36 erstreckt sich oberhalb des Hakens 15 bis zum schrägverlaufenden Wandabschnitt 17 und weist einen kreisbogenförmigen, nach außen hin gekrümmten Formverlauf auf.

Die schwellerseitige Sollbruchstelle 37 ist der Schlitzöffnung 25 der Aufnahme 21 vorgelagert und überragt die Schlitzöffnung 25 in Höhenrichtung gesehen nach oben und unten hin geringfügig. Gemäß Fig. 2 ist die Sollbruchstelle 37 kreisbogenförmig nach innen gekrümmt. Jede Sollbruchstelle 36, 37 wird im Ausführungsbeispiel durch eine Querschnittsverringerung des Verkleidungsteiles 27, 28 gebildet. Die türseitige Sollbruchstelle 36 wirkt bei einem seitlichen Aufprallstoß mit einem radienförmigen Bereich 38 des Fahrzeuglängsträgers 5 zusammen und wird durch diesen aufgebrochen. Die schwellerseitige Sollbruchstelle 37 wirkt mit dem freien Ende des Hakens 15 (horizontaler Wandabschnitt 19 oder Steg 20) zusammen, so daß dieser bei einem seitlichen Aufprallstoß die Sollbruchstelle 37 durchdringt bzw. aufbricht.

Die Türverkrallung 12 kann sich über die gesamte Länge der Tür 2 erstrecken oder aber nur örtlich angeordnet sein. Ferner kann die Türverkrallung 12 auch seitlich vorne und hinten bzw. auch oben an der Tür 2 vorgesehen sein.

**Patentansprüche**

1. Türverkrallung (12) an Kraftfahrzeugen zum Schutz gegen seitliches Auftreffen bei Unfällen, wobei zumindest im unteren Bereich (9) der Tür (2) ein ein Verkrallungselement bildender Haken (15) angeordnet ist, der bei einem seitlichen Aufprallstoß auf die Tür (2) mit einer am außenliegenden Fahrzeuglängsträger [Schweller (5)] vorgesehen Aufnahme (21) verhakend zusammenwirkt, **dadurch gekennzeichnet**, daß die die Verkrallungselemente bildenden Haken 15 und Aufnahme 21 im Normalzustand von Verkleidungsteilen (27, 28) abgedeckt sind und daß bei einem seitlichen Aufprallstoß auf die Tür (2) ab einer definierten Krafteinwirkung benachbart der Verkrallungselemente (15, 21) angeordnete Wandabschnitte der Verkleidungsteile (27, 28) aufbrechen und die Verkrallungselemente (15, 21) freigeben.

2. Türverkrallung nach Anspruch 1, **dadurch gekennzeichnet**, daß das türseitige Verkleidungsteil (27) einen unteren Bereich (9) der Tür (2) mit einem Verstärkungsblech (13) und dem Haken (15) abdeckt.

3. Türverkrallung nach Anspruch 1, **dadurch gekennzeichnet,** daß das schwellerseitige Verkleidungsteil (28) einen außenliegenden Bereich des Fahrzeuglängsträgers (5) samt der Aufnahme (21) abdeckt.

4. Türverkrallung nach den Ansprüchen 1 und 3, **dadurch gekennzeichnet**, daß die Aufnahme (21) durch eine nischenförmige Eindrückung (22) des außenliegenden Fahrzeuglängsträgers (5) gebildet wird, auf die ein winkelförmiges Schließteil (24) aufgesetzt ist, das auf der dem Haken (15) zugekehrten Seite eine Schlitzöffnung (25) aufweist.

5. Türverkrallung nach Anspruch 1, **dadurch gekennzeichnet**, daß die aufbrechenden Wandabschnitte der Verkleidungsteile (27, 28) als Sollbruchstellen (36, 37) ausgebildet sind.

6. Türverkrallung nach Anspruch 5, **dadurch gekennzeichnet**, daß jede Sollbruchstelle (36, 37) durch eine Querschnittsverringerung des Verkleidungsteiles (27, 28) gebildet wird.

7. Türverkrallung nach den Ansprüchen 5 und 6, **dadurch gekennzeichnet**, daß die türseitige Sollbruchstelle (36) benachbart des Hakens (15) beginnt und sich etwa bis zu einem darüberliegenden, schräg verlaufenden Wandabschnitt (17) des Innenbleches (8) der Tur (2) erstreckt.

8. Türverkrallung nach Anspruch 5, **dadurch gekennzeichnet**, daß die schwellerseitige Sollbruchstelle (37) des Verkleidungsteiles (28) der Schlitzöffnung (25) der Aufnahme (21) vorgelagert ist.

9. Türverkrallung nach den Ansprüchen 1 und 5, **dadurch gekennzeichnet**, daß beide Verkleidungsteile (27, 28) im Bereich der Sollbruchstellen (36, 37) einen kreisbogenartigen Formverlauf aufweisen.

10. Türverkrallung nach Anspruch 5, **dadurch gekennzeichnet**, daß die türseitige Sollbruchstelle (36) bei einem seitlichen Aufprallstoß mit einem gegenüberliegenden gerundeten Bereich des Fahrzeuglängsträgers (5) zusammenwirkt.

11. Türverkrallung nach Anspruch 5, **dadurch gekennzeichnet**, daß die schwellerseitige Sollbruchstelle (37) des Verkleidungsteiles (28) bei einem seitlichen Aufprallstoß mit dem türseitigen Haken (15) zusammenwirkt.

**Claims**

1. Door retention means (12) on motor vehicles for protection against lateral impact in the event of accidents, wherein a hook (15) forming a retention member and cooperating in an interlocking manner with a receiving means (21 ) provided on the outside longitudinal support [sill (5)] of the vehicle in the event of a lateral impact upon the door (2) is provided at least in the lower region (9) of the door (2), characterized in that the hook 15 and the receiving means 21 forming the retention members are covered in the normal state by covering members (27, 28), and in the event of a lateral impact upon the door (2) and after a defined application of force wall portions of the covering members (27, 28) arranged adjacent to the retention members (15, 21) fracture and release the retention members (15, 21).

2. Door retention means according to Claim 1, characterized in that the covering part (27) on the door covers a lower area (9) of the door (2) with a reinforcement plate (13) and the hook (15).

3. Door retention means according to Claim 1, characterized in that the covering part (28) on the bearer covers an outer region of the longitudinal support (5) of the vehicle together with the receiving means (21).

4. Door retention means according to Claims 1 and 3, characterized in that the receiving means (21) is formed by a recess-shaped depression (22) in the outside longitudinal support (5) of the vehicle, on which is set an angular closing part (24) having a slot opening on the side facing the hook (15).

5. Door retention means according to Claim 1, characterized in that the fracturing wall portions of the covering parts (27, 28) are constructed as nominal fracture points (36, 37).

6. Door retention means according to Claim 5, characterized in that each nominal fracture point (36, 37) is formed by a reduction in the cross-section of the covering part (27, 28).

7. Door retention means according to Claims 5 and 6, characterized in that the nominal fracture point (36) on the door starts adjacent to the hook (15) and extends substantially as far as an obliquely extending wall portion (17) of the inner panel (8) of the door (2) lying thereabove.

8. Door retention means according to Claim 5, characterized in that the nominal fracture point (37) of the covering part (28) on the sill is positioned in front of the slot opening (25 ) of the receiving means (21).

9. Door retention means according to Claims 1 and 5, characterized in that the two covering parts (27, 28) have an arcuate shape in the region of the nominal fracture points (36, 37).

10. Door retention means according to Claim 5, characterized in that in the event of a lateral impact the nominal fracture point (36) on the door cooperates with a rounded area - lying opposite - of the longitudinal support (5) of the vehicle.

11. Door retention means according to Claim 5, characterized in that in the event of a lateral impact the nominal fracture point (37) of the covering part (28) on the sill cooperates with a hook (15) on the door.

## Revendications

1. Dispositif d'accrochage de porte (12) de véhicule automobile pour la protection contre un impact latéral en cas d'accident, dans lequel, dans la zone inférieure (9) de la porte (2) au moins, il est prévu un crochet (15), formant un élément d'accrochage, qui en cas de choc latéral sur la porte (2) coopère par accrochage avec un logement (21), prévu sur le longeron extérieur (bas de caisse) (5) du véhicule, caractérisé en ce que le crochet (15) et le logement (21), formant les éléments d'accrochage, sont, à l'état normal, dissimulés par des éléments de revêtement (27, 28) et en ce que dans le cas d'un choc latéral sur la porte (2), des parties de paroi des éléments de revêtement (27, 28), situées à côté des éléments d'accrochage (15, 21), se brisent à partir d'une force d'action définie et libèrent les éléments d'accrochage (15, 21).

2. Dispositif d'accrochage de porte selon la revendication 1, caractérisé en ce que l'élément de revêtement (25) côté porte dissimule une zone inférieure (9) de la porte (2), au moyen d'une tôle de renfort (13) et du crochet (15).

3. Dispositif d'accrochage de porte selon la revendication 1, caractérisé en ce que l'élément de revêtement (28) côté longeron dissimule une zone extérieure du longeron (5) du véhicule avec le logement (21).

4. Dispositif d'accrochage de porte selon les revendications 1 et 3, caractérisé en ce que le logement (21) est formé par un enfoncement (22) en forme de niche du longeron extérieur (5) du véhicule, enfoncement sur lequel est placé un élément de fermeture (24) en forme de cornière qui présente une ouverture en fente (25), sur le côté tourné vers le crochet (15).

5. Dispositif d'accrochage de porte selon la revendication 1, caractérisé en ce que les parties de paroi qui se brisent, des éléments de revêtement (27, 28), sont conçues sous la forme de points destinés à rupture (36, 37).

6. Dispositif d'accrochage de porte selon la revendication 5, caractérisé en ce que chaque point de rupture (36, 37) est formé par une réduction de la section transversale de l'élément de revêtement (27, 28).

7. Dispositif d'accrochage de porte selon les revendications 5 et 6, caractérisé en ce que le point de rupture (36) côté porte commence à côté du crochet (15) et s'étend à peu près jusqu'à une partie de paroi (17) située au-dessus, s'étendant obliquement, de la tôle intérieure (8) de la porte (2).

8. Dispositif d'accrochage de porte selon la revendication 5, caractérisé en ce que le point de rupture (37) côté longeron de l'élément de revêtement (28) est placé devant l'ouverture en fente (25) du logement (21).

9. Dispositif d'accrochage de porte selon les revendications 1 et 5, caractérisé en ce que les deux éléments de revêtement (27, 28) présentent un parcours en arc de cercle, dans la zone des points de rupture (36, 37).

10. Dispositif d'accrochage de porte selon la revendication 5, caractérisé en ce que le point de rupture côté porte (36) coopère, en cas de choc latéral, avec une zone arrondie opposée du longeron (5) du véhicule.

11. Dispositif d'accrochage de porte selon la revendication 5, caractérisé en ce que le point de rupture (37) côté longeron de l'élément de revêtement (28) coopère avec le crochet (15) côté porte, en cas de choc latéral.

FIG.1

FIG.2

FIG.3

FIG.4